# EUROPÄISCHE PATENTSCHRIFT

(11) **EP 2 861 498 B1**
(45) Veröffentlichungstag und Bekanntmachung des Hinweises auf die Patenterteilung: **29.03.2017**
(21) Anmeldenummer: 13717040.3
(22) Anmeldetag: 18.04.2013
(51) Int. Cl.: B65B 43/18, B65B 43/32, B65B 43/44, B65B 43/46, B65B 43/52, B65B 59/00, B65B 65/00, B65B 35/20, B65B 35/40, B65B 43/12, B65B 43/26, B65B 43/39, B65B 61/26, B65C 1/02, B65B 7/20, B65G 59/02, B65G 59/04

(54) **VERPACKUNGSANORDNUNG, INSBESONDERE KARTONVERPACKUNGSANORDNUNG**
PACKAGING ARRANGEMENT, PARTICULARLY CARTON PACKAGING ARRANGEMENT
DISPOSITIF D'EMBALLAGE, PARTICULIÈREMENT DISPOSITIF D'EMBALLAGE POUR CARTONS

(30) Priorität: 14.06.2012 DE 102012209987
(43) Veröffentlichungstag der Anmeldung: 22.04.2015
(73) Patentinhaber: Robert Bosch GmbH, 70442 Stuttgart (DE)
(72) Erfinder: WEIS, Josef, Nussloch 69226 (DE); GRABOWSKI, Ruediger, 71332 Waiblingen (DE); RAPP, Reinhard, 70563 Stuttgart (DE)
(86) Internationale Anmeldenummer: PCT/EP2013/058044
(87) Internationale Veröffentlichungsnummer: WO 2013/185954

(56) Entgegenhaltungen:
- EP-A1- 0 705 684
- WO-A2-03/047977
- US-A- 3 060 654
- US-A- 5 671 587

## Beschreibung

### Stand der Technik

Die vorliegende Erfindung betrifft eine Verpackungsanordnung und insbesondere eine Kartonverpackungsanordnung, welche insbesondere einen hängenden Transport von Packmitteln bei einer umlaufenden Förderstrecke ermöglicht.

Im Bereich der Verpackungstechnik ist ein Technikgebiet die Verpackung mittels Karton, was aufgrund des Verpackungsmaterials spezielle Anforderungen erfüllen muss. Häufig werden dabei mehrere Packgüter in einen Karton gemeinsam gepackt und für einen Versand fertig gemacht. Üblicherweise erfolgt hierbei ein Bepacken eines geöffneten Kartons von oben, wie beispielsweise aus der EP 1 530 541 B1 bekannt. Diese bekannte Kartoniermaschine hat jedoch den Nachteil, dass bei einer Formatverstellung, beispielsweise einer Umstellung auf größere oder kleinere Kartons, auch die entsprechenden Haltevorrichtungen für die Kartons ausgetauscht oder z.B. mechanisch verstellt werden müssen, was zu langen Rüst- und Stillstandszeiten der Kartoniermaschine führt. Ferner besteht bei bekannten Kartoniermaschinen immer das Problem, dass verschiedene Handhabungsschritte, wie z.B. Aufklappen eines zusammengefalteten Kartonzuschnitts, Beladen des aufgeklappten Kartons, Verschließen des beladenen Kartons, usw., verschieden lange Taktzeiten benötigen, so dass die erreichbare Maschinenausbringung durch den am längsten dauernden Vorgang bestimmt wird. Dies führt jedoch im Betrieb häufig zu unerwünschten Geschwindigkeitsschwankungen an Modulen mit kürzeren Arbeitszeiten bzw. zu unerwünschten Stillständen und Synchronisationsproblemen.

EP 0 705 684 A1 beschreibt eine vertikal angeordnete Transportvorichtung mit einer umlaufenden Förderstrecke, die einen Ober- und einen Untertrumbereich aufweist. Der Karton wird im Untertrumbereich transportiert. Vorgeschaltet befindet sich ein Transportrad zum Voraufrichten der Kartons. Das vorgeschaltete Transportrad weist Saugelemente zum Halten und einen Hebel zum Aufrichten auf. Der Karton wird im halbaufgerichteten Zustand an die Transportvorrichtung übergeben, dann von der Transportvorrichtung zwischen zwei Hebeln fertig aufgerichtet, anschließend zwischen den Hebeln gehalten und im Untertrum weiter transportiert.

### Offenbarung der Erfindung

Die erfindungsgemäße Verpackungsanordnung mit den Merkmalen des Anspruchs 1 weist demgegenüber den Vorteil auf, dass das Packmittel, insbesondere Faltschachteln aus Karton, an einem Untertrumbereich einer vertikal angeordneten, umlaufenden Förderstrecke transportiert werden können. Somit erfolgt erfindungsgemäß ein hängender Transport der Packmittel. Dies hat den weiteren Vorteil, dass ein Bereich unterhalb der vertikal angeordneten Förderstrecke frei ist und beispielsweise für die Anordnung von unterschiedlichsten Handhabungs-Modulen genutzt werden kann. Hierdurch ergeben sich erfindungsgemäß viele Freiheitsgrade, welche insbesondere bei der Verwendung von Karton als Packmittel sehr hilfreich sind, da bei Karton-Packmitteln eine Vielzahl von Handhabungsschritten notwendig ist (z.B. Aufklappen der üblicherweise zusammengelegt zugeführten Kartons, Aufhalten von Kartonlaschen, Befüllen des Kartons, Verschließen des Kartons, Bedrucken/Beschriften des Kartons, etc.). Weiter führt dies zu einer sehr kompakten Verpackungsanordnung mit nur geringem Platzbedarf. Ferner sind an der umlaufenden Förderstrecke eine Vielzahl von Förderelementen angeordnet, die jeweils individuell und unabhängig voneinander antreibbar sind. Hierdurch kann eine Transporteinrichtung bereitgestellt werden, bei der durch individuelles Ansteuern von einzelnen Förderelementen individuelle Förderaufgaben realisiert werden können. Insbesondere kann hierdurch ein Ausgleich von Schwankungen im Produktstrom oder beliebig erzeugte definierte Abstände zwischen einzelnen Förderelementen realisiert werden. Ferner kann eine erleichterte Synchronisierung der Produkte auf eine Abgabegeschwindigkeit und ein produktschonender Transport verwirklicht werden. Darüber hinaus können neue Formate, wie z.B. unterschiedliche Packungsgrößen und/oder unterschiedliche Packungsformen, ohne Umrüstzeit direkt mittels der individuell antreibbaren Förderelemente umgestellt werden. Die einzelnen Förderelemente werden bevorzugt mittels eines Linearantriebs angetrieben. In einer alternativen Ausführung kann eine hängende Förderung der Gegenstände aber auch unter Verwendung eines konventionellen Transportsystems (z.B. Kette, Zahnriemen o.ä.) erfolgen, mit den bekannten Nachteilen hinsichtlich der Flexibilität.

Weiterhin bilden jeweils ein erstes und ein zweites Förderelement eine gemeinsame Fördereinrichtung, welche nur ein einzelnes Packmittel fördern. Somit werden zwei einzelne Förderelemente zu einer gemeinsamen Fördereinrichtung zusammengeschlossen und fördern das Packmittel gemeinsam entlang der Förderstrecke.
Ferner umfasst dabei das erste Förderelement eine Aufrichteinrichtung zum Aufrichten eines zusammengefalteten Packmittels, insbesondere eines zusammengefalteten Kartons. Weiter ist das zweite Förderelement eine Halteeinrichtung zum Halten des Packmittels. Die Halteeinrichtung ist ein Greifer oder ein Saugelement.

Die Halteeinrichtung ist ein Greifer oder ein Saugelement. Die Aufrichteinrichtung ist ein schwenkbarer Hebel, wobei durch den Schwenkvorgang des Hebels das zusammengefaltete Packmittel aufgerichtet wird.
Die Unteransprüche zeigen bevorzugte Weiterbildungen der Erfindung.
Gemäß einer weiteren bevorzugten Ausgestaltung der vorliegenden Erfindung umfasst die erfindungsgemäße Verpackungsanordnung ferner ein Packmittelmodul mit einem Packmittelvorrat mit einer Vielzahl von zusammengefalteten Packmitteln. Dabei ist der Packmittelvorrat unterhalb der umlaufenden Förderstrecke angeordnet. Somit ist es möglich, dass das Förderelement beim Vorbeifahren am Packmittelvorrat ein Packmittel mitnimmt und dieses dann aufgerichtet (aufgefaltet) wird und über die Förderstrecke transportiert wird.
Weiter bevorzugt weist das erste und/oder zweite Förderelement, welche zusammen die gemeinsame Fördereinrichtung bilden, eine Laschenöffnungsvorrichtung auf, welche Laschen am Packmittel in eine Offenstellung bringt und offen hält. Hierdurch wird sichergestellt, dass bei einem nachfolgenden Beladevorgang keine der Laschen des Packmittels dem Beladevorgang im Wege stehen und das Packmittel vollständig geöffnet ist.

Gemäß einer weiteren bevorzugten Ausgestaltung der Erfindung umfasst die Verpackungsanordnung ferner ein Belademodul, um Packgüter in das Packmittel einzubringen, während sich das Packmittel noch am Untertrumbereich der umlaufenden Förderstrecke befindet. Hierdurch wird in die erfindungsgemäße Verpackungsanordnung zusätzlich noch ein Belademodul integriert, wobei das Belademodul vorzugsweise seitlich am Packmittel angeordnet ist und das Packmittel auch seitlich geöffnet ist. Hierdurch kann ein Einschiebevorgang z.B. mittels eines Einschubelements in waagerechter Richtung ausgeführt werden, um Packgüter seitlich in das geöffnete Packmittel einzuschieben. Weiter bevorzugt umfasst das Belademodul ferner einen geschlossenen, insbesondere ovalförmigen Umlauf, an welchem eine Vielzahl von Einschubelementen umlaufen. Dabei sind vorzugsweise jedes Einschubelement individuell und unabhängig von anderen Einschubelementen antreibbar. Auch hierdurch kann eine unabhängige Einschubbewegung durch einzelne Einschubelemente realisiert werden. Durch die Verwendung des Umlaufs am Belademodul wird erreicht, dass eine Arbeitsstrecke und eine Rücklaufstrecke nicht identisch sind und beispielsweise die Einschubelemente mit flexiblen Bewegungsprofilen an den jeweiligen Strecken bewegt werden können. Auch wird durch dieses flexible Belademodul erreicht, dass Formatänderungen bzw. Formatumstellungen keinen Einfluss auf das Belademodul haben, welches flexibel an derartige Formatänderungen einfach durch Änderung des Bewegungsablaufs angepasst werden kann. Für den Rücklauf können die Einschubelemente abschnittsweise auch antriebslos geführt werden oder durch mechanische Mitnahmen oder Fahren im Stau oder dergleichen oder unter Nutzung vorhandener Bewegungsenergie bewegt werden. Vorzugsweise werden die Einschubelemente mittels Linearantrieb angetrieben.

Weiter bevorzugt umfasst die erfindungsgemäße Verpackungsanordnung ferner ein Verschlussmodul, um das befüllte Packmittel zu verschließen. Vorzugsweise umfasst das Verschlussmodul Vorrichtungen, um Laschen des Packmittels zu schließen und anschließend beispielsweise mittels Heißleim zu fixieren.

Vorzugsweise ist ein Waagemodul zum Wiegen von leeren und/oder beladenen Packmitteln vorgesehen.

Weiter bevorzugt umfasst die erfindungsgemäße Verpackungsanordnung ein Kennzeichnungsmodul, um die Packmittel zu kennzeichnen. Das Kennzeichnungsmodul kann beispielsweise eine Druckeinrichtung umfassen, welche direkt auf das Packmittel eine Kennzeichnung aufdruckt, oder alternativ eine Etikettklebeeinheit umfassen, welche Etiketten oder dergleichen auf das Packmittel aufklebt.

Gemäß einer weiteren bevorzugten Ausgestaltung der vorliegenden Erfindung sind die zu transportierenden Gegenstände Packmittel, insbesondere Kartons. Besonders bevorzugt ist dabei die Vorrichtung eine Kartonverpackungsvorrichtung, bei der ein zusammengelegter Karton aufgenommen und aufgerichtet (aufgeklappt) wird, anschließend beladen wird und dann verschlossen und ggf. noch gekennzeichnet wird, wobei alle Vorgänge vorzugsweise am Untertrumbereich der umlaufenden Förderstrecke vorgenommen werden. Anschließend kann eine Übergabe auf ein weiteres Transportsystem erfolgen.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Seitenansicht einer Verpackungsanordnung gemäß einem ersten Ausführungsbeispiel der Erfindung und
- Figur 2: eine schematische Seitenansicht einer Verpackungsanordnung gemäß einem zweiten Ausführungsbeispiel der Erfindung.

### Bevorzugte Ausführungsformen der Erfindung

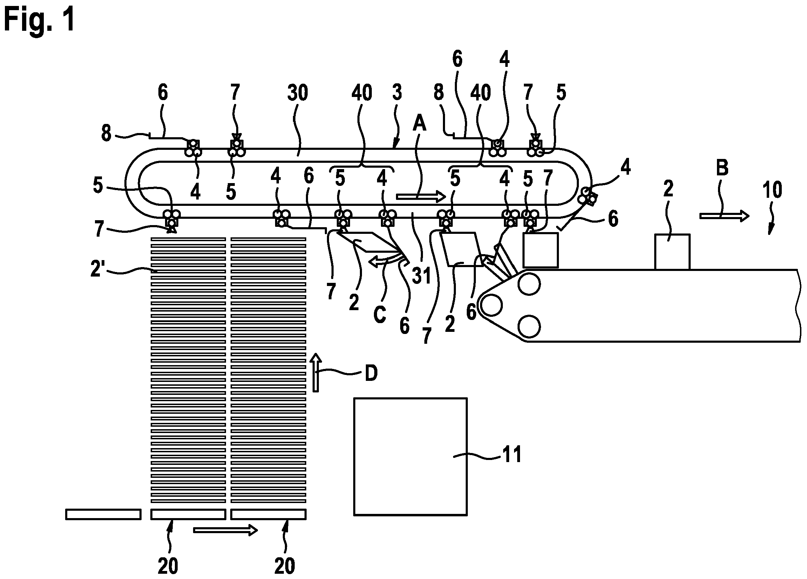

Nachfolgend wird mit Bezugnahme auf Figur 1 eine Verpackungsanordnung 1 gemäß einem ersten bevorzugten Ausführungsbeispiel der Erfindung im Detail beschrieben.

Wie aus Figur 1 ersichtlich ist, umfasst die Verpackungsanordnung 1 zum Transportieren eines Packmittels 2 eine umlaufende Förderstrecke 3, welche ovalförmig angeordnet ist. Die umlaufende Förderstrecke 3 ist dabei in Vertikalrichtung angeordnet, so dass ein Obertrumbereich 30 und ein Untertrumbereich 31 vorhanden ist. Eine Förderung der Packmittel 2 erfolgt dabei am Untertrumbereich 31 in hängender Weise.

An der umlaufenden Förderstrecke ist eine Vielzahl von Förderelementen angeordnet, wobei das Bezugszeichen 4 ein erstes Förderelement und das Bezugszeichen 5 ein zweites Förderelement bezeichnet. Die beiden Förderelemente 4, 5 weisen unterschiedliche Handhabungseinrichtungen auf, wobei das erste Förderelement 4 eine Aufrichteinrichtung 6 aufweist und das zweite Förderelement 5 eine Halteeinrichtung 7 aufweist. Die Aufrichteinrichtung 6 des ersten Förderelements ist dabei ein schwenkbarer Hebel, dessen freies Ende hakenförmig umgebogen ist, und eine Laschenöffnungseinrichtung 8 bildet. Die Halteeinrichtung 7 dieses Ausführungsbeispiels ist ein Sauger, kann alternativ aber auch ein Greifer sein.

Wie in Figur 1 durch die geschweifte Klammer angedeutet, bilden dabei ein erstes Förderelement 4 und ein zweites Förderelement 4 eine gemeinsame Fördereinrichtung 40. Die beiden Förderelemente 4, 5 der Fördereinrichtung 40 wirken dabei bei der Entnahme und dem Aufklappen des Packmittels 2 zusammen. Dabei ist trotzdem jedes einzelne Förderelement jeder Fördereinrichtung 40 individuell und unabhängig von den anderen Förderelementen ansteuerbar und bewegbar, vorzugsweise mittels Linearantrieb.

Wie weiter aus Figur 1 ersichtlich ist, sind die Packmittel 2 in mehreren Packmittelvorräten 20 angeordnet, wobei das Bezugszeichen 2' die jeweils in den Packmittelvorräten zusammengefalteten Zustände der Packmittel kennzeichnet. Da die umlaufende Förderstrecke 3 vertikal angeordnet ist, kann der Packmittelvorrat 20 unterhalb der Förderstrecke 3 angeordnet werden. Somit können die beiden zusammenwirkenden ersten und zweiten Förderelemente 4, 5, welche die gemeinsame Fördereinrichtung 40 bilden, jeweils ein oberstes, zusammengefaltetes Packmittel 2' vom Stapel entnehmen. Wie in Figur 1 angedeutet, können dabei unter der Förderstrecke 3 mehrere Packmittelstapel vorgesehen werden, wobei insbesondere ein flexibler Wechsel von Entnahmepositionen des zusammengefalteten Packmittels 2' zwischen den einzelnen Stapeln möglich ist. Da die Entnahme der zusammengelegten Packmittel 2' von oben erfolgt, ist eine Reststapelgröße im Packmittelvorrat unabhängig, so dass immer eine sichere Verarbeitbarkeit ermöglicht wird, da die Packmittelstapel jeweils nach einer Entnahme in ihrer Höhe nachgestellt werden (Pfeils D). Ferner können die Packmittelvorräte auch außerhalb der Verpackungsanordnung mit Packmitteln vorbefüllt werden und während eines laufenden Produktionsprozesses ohne Anhalten der Anlage gegen leere Magazine ausgetauscht werden.

Weiterhin ermöglicht die Verwendung von zwei individuell antreibbaren und verfahrbaren ersten und zweiten Förderelementen 4, 5, dass formatunabhängig jeweils Packmittel vom Packmittelvorrat 20 entnommen werden können und aufgerichtet werden können. Erfindungsgemäß ist es nämlich möglich, dass ein Abstand in Laufrichtung zwischen dem ersten und zweiten Förderelement individuell auf die jeweilige Verpackungsgröße durch eine Steuereinheit vorgegeben werden kann, so dass problemlos Packmittel verschiedenster Größen verarbeitet werden können. Hierbei gibt es keinerlei Formateinschränkungen, beispielsweise durch Halter oder Aufnahmen für die Verpackungen oder dergleichen. Der Abstand zwischen dem ersten und zweiten Förderelement 4, 5 kann jeweils individuell eingestellt werden. Auch ist es mit der erfindungsgemäßen Verpackungsanordnung möglich, z.B. abwechselnd unterschiedlich große Packmittel zu verarbeiten.

Bei dem in Figur 1 gezeigten Ausführungsbeispiel wird nun durch die durch das erste und das zweite Förderelement 4, 5 gebildete gemeinsame Fördereinrichtung 40 erst ein zusammengefaltetes Packmittel 2' vom Packmittelvorrat 20 entnommen. Anschließend wird das zusammengefaltete Packmittel durch Schwenken der Aufrichteinrichtung 6 in Richtung des Pfeils C aufgerichtet, wobei die ersten und zweiten Förderelemente entlang der umlaufenden Förderstrecke 3 in Richtung des Pfeils A bewegt werden. Die Schwenkrichtung der Aufrichteinrichtung 6 ist hierbei entgegen der Förderrichtung an der Förderstrecke. Zum Aufrichten des zusammengefalteten Packmittels 2' können dabei die beiden Förderelemente 4, 5 mit gleicher Geschwindigkeit bewegt werden oder alternativ kann eines der Förderelemente 4, 5 schneller als das andere der Förderelemente bewegt werden, wodurch das Aufrichten bewirkt wird. Es erfolgt während des gesamten Verarbeitungsprozesses keine Übergabe des Packmittels, was ein großer Vorteil dieser Lösungsvariante ist (entfallende Schnittstelle). Das aufgerichtete Packmittel 2 wird dann an ein Transportsystem 10 übergeben, über welches ein Weitertransport in Richtung des Pfeils B erfolgt.

Ferner ist mit dem Bezugszeichen 11 ein Ausscheidebehälter gekennzeichnet, in welchem defekte Packmittel ausgeschieden werden können. Die Anordnung mehrerer Ausscheidebehälter (z. B. nach jedem Bearbeitungsschritt) ist denkbar.

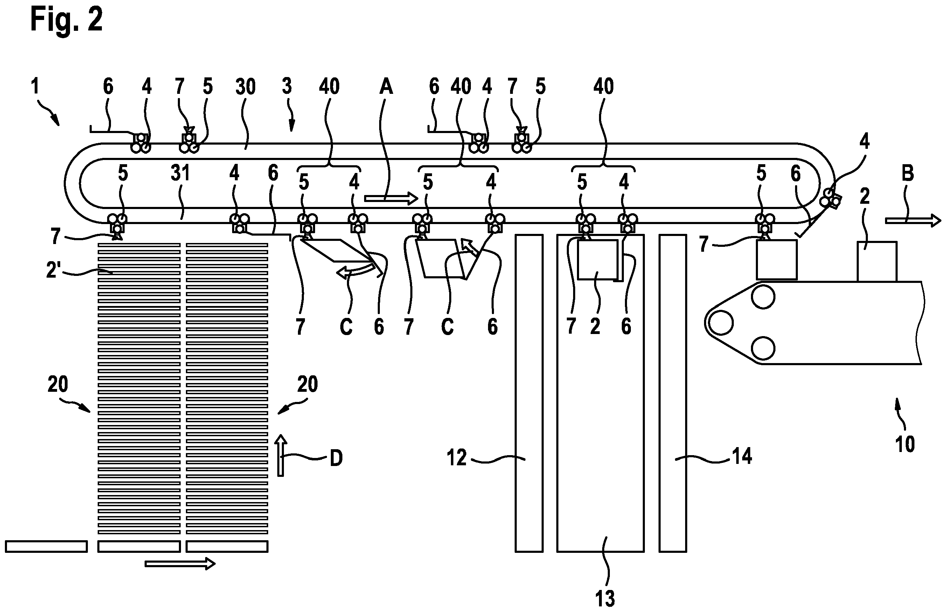

Figur 2 zeigt eine Verpackungsanordnung 1 gemäß einem zweiten Ausführungsbeispiel der Erfindung, wobei gleiche bzw. technisch gleiche Bauteile mit den gleichen Bezugszeichen wie im ersten Ausführungsbeispiel bezeichnet sind.

Wie beim ersten Ausführungsbeispiel, bilden beim zweiten Ausführungsbeispiel ein erstes Förderelement 4 und ein zweites Förderelement 5 eine gemeinsame Fördereinrichtung 40. Beim zweiten Ausführungsbeispiel ist unterhalb der umlaufenden Förderstrecke 30 jedoch noch neben der Entnahmefunktion und der Aufrichtfunktion des zusammengefalteten Packmittels 2 ein Kennzeichnungsmodul 12 und ein Verschlussmodul 14 angeordnet. Durch das Kennzeichnungsmodul 12 erfolgt eine Bedruckung des Packmittels 2 zur Kennzeichnung des Inhalts. Ferner wird durch ein Belademodul 13 das geöffnete Packmittel 2 mit Packgütern befüllt. Das Belademodul 13 ist dabei seitlich an der vertikal angeordneten Förderstrecke 3 angeordnet, so dass ein seitliches Einschieben der Packgüter in das geöffnete Packmittel 2 möglich ist. Um ein fehlerfreies Einschieben zu ermöglichen, ist dabei am freien Ende der Aufrichteinrichtung 6 eine Laschenöffnungseinrichtung 8 in Form eines umgebogenen hakenförmigen Elements vorgesehen, welches die Laschen des Packmittels 2 öffnet und in Offenstellung hält. In Transportrichtung (Pfeil A) dem Belademodul 13 nachgeordnet ist dann ein Verschlussmodul 14, welches das beladene, noch offene Packmittel 2 verschließt. Das Verschlussmodul 14 kann dabei beispielsweise aktive Elemente, z.B. Greifer oder dergleichen, und/oder passive Elemente (feststehende Führungsschienen oder dergleichen) aufweisen, um den Verschlussvorgang auszuführen.

Auch im zweiten Ausführungsbeispiel sind die einzelnen Förderelemente 4, 5 jeweils wieder individuell und unabhängig voneinander antreibbar. Somit können insbesondere bei den verschiedenen Modulen unterschiedliche Geschwindigkeiten realisiert werden. Beispielsweise kann beim Kennzeichnungsmodul ein vollständiges Anhalten der durch das erste und zweite Förderelement 4, 5 gebildeten gemeinsamen Fördereinrichtung 40 ausgeführt werden. Im Gegensatz dazu kann beim Beladungsmodul 13 eine vorbestimmte Geschwindigkeit der durch das erste und zweite Förderelement 4, 5 gebildeten gemeinsamen Fördereinrichtung eingehalten werden, wobei das Belademodul ein entsprechend mitbewegtes Einschiebeelement aufweist. Auch beim Verschlussmodul 14 können beispielsweise aktive Verschlusselemente, wie Greifer oder dergleichen, mit vorbestimmten Geschwindigkeiten mit dem bewegten Packmittel mitbewegt werden.

Zusammenfassend ist somit für die beschriebenen Ausführungsbeispiele der erfindungsgemäßen Verpackungsanordnung 1 festzustellen, dass ein hängender Transport von Packmitteln, insbesondere Karton-Packmitteln, möglich ist, wobei gleichzeitig auch eine Entnahme und ein Aufrichten von zusammengelegten Packmitteln möglich ist. Durch die hängende Anordnung der Packmittel infolge der vertikal angeordneten Förderstrecke 3 ist es somit möglich, den Raum unterhalb der transportierten Packmittel für die Anordnung verschiedenster Module zu nutzen. Besonders bevorzugt werden die Förderelemente an der Förderstrecke dabei individuell bewegt und weiter bevorzugt bilden dabei jeweils ein erstes Förderelement 4 und ein zweites Förderelement 5 eine gemeinsame Fördereinrichtung 40, welche den Fördervorgang an der Förderstrecke 3 ausführen.

## Patentansprüche

1. Verpackungsanordnung, umfassend
- eine Vorrichtung zum Transportieren eines Packmittels (2), insbesondere eines Kartons, mit
- einer umlaufenden Förderstrecke (3) und
- einer Vielzahl von Förderelementen (4, 5),
- wobei die umlaufende Förderstrecke (3) vertikal angeordnet ist, so dass sich ein Obertrumbereich (30) und ein Untertrumbereich (31) ergibt,
- wobei das Packmittel (2) am Untertrumbereich (31) transportiert wird,
- wobei jeweils ein erstes Förderelement (4) und ein zweites Förderelement (5) eine gemeinsame Fördereinrichtung (40) bilden, welche ein einzelnes Packmittel (2) fördert,
**dadurch gekennzeichnet, dass**
- die Förderelemente (4, 5) jeweils individuell und unabhängig voneinander antreibbar sind,
- das erste Förderelement (4) eine Aufrichteinrichtung (6) zum Aufrichten eines zusammengefalteten Packmittels (2') aufweist, und
- das zweite Förderelement (5) eine Halteeinrichtung (7) zum Halten des Packmittels (2) aufweist,
- wobei die Aufrichteinrichtung (6) ein schwenkbarer Hebel ist, und
- wobei die Halteeinrichtung (7) ein Greifer oder ein Saugelement ist.

2. Verpackungsanordnung nach Anspruch 1, **dadurch gekennzeichnet, dass** das erste Förderelement (4) und/oder das zweite Förderelement (5) der gemeinsamen Fördereinrichtung (40) eine Laschenöffnungseinrichtung (8) aufweist, welche Laschen am Packmittel (2) in eine Offenstellung bringt und/oder in einer Offenstellung hält.

3. Verpackungsanordnung nach einem der vorhergehenden Ansprüche, ferner umfassend ein Packmittelmodul mit einem Packmittelvorrat (20) mit einer Vielzahl von zusammengefalteten Packmitteln (2'), wobei der Packmittelvorrat (20) unterhalb der umlaufenden Förderstrecke (3) angeordnet ist.

4. Verpackungsanordnung nach einem der vorhergehenden Ansprüche, ferner umfassend ein Belademodul (13), um Packgüter in das Packmittel (2) einzubringen, während sich das Packmittel (2) am Untertrumbereich (31) der Förderstrecke (3) befindet.

5. Verpackungsanordnung nach Anspruch 4, **dadurch gekennzeichnet, dass** das Belademodul (13) seitlich am geförderten Packmittel (2) angeordnet ist und dass das Belademodul ein Einschubelement aufweist, um Packgüter seitlich in das Packmittel (2) einzuschieben.

6. Verpackungsanordnung nach einem der Ansprüche 4 oder 5, **dadurch gekennzeichnet, dass** das Belademodul (13) ferner einen geschlossenen, insbesondere ovalförmigen, Umlauf aufweist, an welchem eine Vielzahl von Einschubelementen umlaufen, wobei insbesondere die Einschubelemente jeweils individuell und unabhängig voneinander antreibbar sind.

7. Verpackungsanordnung nach einem der vorhergehenden Ansprüche, ferner umfassend ein Verschlussmodul (14), um das befüllte Packmittel zu verschließen und/oder ein Waagemodul zum Wiegen von leeren und/oder beladenen Packmitteln, und/oder ein Kennzeichnungsmodul (12), um Packmittel (2) zu kennzeichnen.

8. Verpackungsanordnung nach einem der vorhergehenden Ansprüche, **dadurch gekennzeichnet, dass** die Verpackungsanordnung eine Kartonverpackungsanordnung ist.

## Claims

1. Packaging arrangement, comprising
- an apparatus for transporting a packaging means (2), in particular a carton, having
- a circulating conveying route (3) and
- a multiplicity of conveying elements (4, 5),
- wherein the circulating conveying route (3) is arranged vertically so that an upper-strand region (30) and a lower-strand region (31) are obtained,
- wherein the packaging means (2) are transported on the lower-strand region (31),
- wherein in each case a first conveying element (4) and a second conveying element (5) form a common conveying device (40), which conveys an individual packaging means (2),
**characterized in that**
- the conveying elements (4, 5) can be driven in each case individually and independently of one another,
- the first conveying element (4) has an erecting device (6) for erecting a collapsed packaging means (2'), and
- the second conveying element (5) has a retaining device (7) for retaining the packaging means (2),
- wherein the erecting device (6) is a pivotable lever, and
- wherein the retaining device (7) is a gripper or a suction element.

2. Packaging arrangement according to Claim 1, **characterized in that** the first conveying element (4) and/or the second conveying element (5) of the common conveying device (40) has a flap-opening device (8), which brings flaps on the packaging means (2) into an open position and/or holds them in an open position.

3. Packaging arrangement according to one of the preceding claims, further comprising a packaging-means module with a packaging-means store (20) having a multiplicity of collapsed packaging means (2'), wherein the packaging-means store (20) is arranged beneath the circulating conveying route (3).

4. Packaging arrangement according to one of the preceding claims, further comprising a loading module (13) for inserting articles into the packaging means (2) while the packaging means (2) are located on the lower-strand region (31) of the conveying route (3).

5. Packaging arrangement according to Claim 4, **characterized in that** the loading module (13) is arranged laterally on the conveyed packaging means (2) and **in that** the loading module has a pushing-in element for pushing articles laterally into the packaging means (2).

6. Packaging arrangement according to either of Claims 4 and 5, **characterized in that** the loading module (13) further has a closed, in particular oval, circulatory path, on which a multiplicity of pushing-in elements circulates, wherein in particular the pushing-in elements can each be driven individually and independently of one another.

7. Packaging arrangement according to one of the preceding claims, further comprising a closure module (14) for closing the filled packaging means and/or a weighing module for weighing empty and/or loaded packaging means, and/or an identifying module (12) for providing packaging means (2) with identification.

8. Packaging arrangement according to one of the preceding claims, **characterized in that** the packaging arrangement is a cartoning arrangement.

## Revendications

1. Système d'emballage, comprenant
- un dispositif pour transporter un emballage (2), en particulier un carton, comprenant :
- une section de transport en circuit fermé (3) et
- une pluralité d'éléments de transport (4, 5),
- la section de transport en circuit fermé (3) étant disposée verticalement de telle sorte qu'une région de tronçon supérieur (30) et une région de tronçon inférieur (31) soient formées,
- l'emballage (2) étant transporté sur la région de tronçon inférieur (31),
- un premier élément de transport (4) et un deuxième élément de transport (5) formant à chaque fois un dispositif de transport commun (40), qui transporte un emballage individuel (2),
**caractérisé en ce que**
- les éléments de transport (4, 5) peuvent à chaque fois être entraînés individuellement et indépendamment l'un de l'autre,
- le premier élément de transport (4) présentant un dispositif de redressement (6) pour redresser un emballage replié (2') et
- le deuxième élément de transport (5) présentant un dispositif de retenue (7) pour retenir l'emballage (2),
- le dispositif de redressement (6) étant un levier pivotant, et
- le dispositif de retenue (7) étant un dispositif de préhension ou un élément aspirant.

2. Système d'emballage selon la revendication 1, **caractérisé en ce que** le premier élément de transport (4) et/ou le deuxième élément de transport (5) du dispositif de transport commun (40) présentent un dispositif d'ouverture de pattes (8) qui amène des pattes sur l'emballage (2) dans une position d'ouverture et/ou qui les maintient dans une position d'ouverture.

3. Système d'emballage selon l'une quelconque des revendications précédentes, comprenant en outre un module d'emballage avec une réserve d'emballages (20) avec une pluralité d'emballages repliés (2'), la réserve d'emballage (20) étant disposée en dessous de la section de transport en circuit fermé (3).

4. Système d'emballage selon l'une quelconque des revendications précédentes, comprenant en outre un module de chargement (13) pour introduire des marchandises emballées dans l'emballage (2), l'emballage (2) se trouvant au niveau de la région de tronçon inférieur (31) de la section de transport (3).

5. Système d'emballage selon la revendication 4, **caractérisé en ce que** le module de chargement (13) est disposé latéralement au niveau de l'emballage transporté (2) et **en ce que** le module de chargement présente un élément d'enfoncement pour introduire des marchandises à emballer latéralement dans l'emballage (2).

6. Système d'emballage selon l'une quelconque des revendications 4 ou 5, **caractérisé en ce que** le module de chargement (13) présente en outre un circuit fermé, en particulier de forme ovale, au niveau duquel tourne une pluralité d'éléments d'insertion, les éléments d'insertion pouvant notamment être entraînés à chaque fois individuellement et indépendamment les uns des autres.

7. Système d'emballage selon l'une quelconque des revendications précédentes, comprenant en outre un module de fermeture (14) afin de fermer l'emballage rempli et/ou un module de pesée pour peser des emballages vides et/ou chargés, et/ou un module de marquage (12) pour marquer des emballages (2).

8. Système d'emballage selon l'une quelconque des revendications précédentes, **caractérisé en ce que** le système d'emballage est un système d'emballage en carton.
